# EUROPEAN PATENT APPLICATION

(11) **EP 4 250 521 A1**
(43) Date of publication of application: **27.09.2023**
(21) Application number: 22896123.1
(22) Date of filing: 18.11.2022
(51) Int. Cl.: H02J 7/00, H01M 10/44, H05K 7/20

(54) **BATTERY CELL CHARGING AND DISCHARGING DEVICE COMPRISING LOWER COOLING FANS**

(30) Priority: 19.11.2021 KR 20210160235; 17.11.2022 KR 20220154858
(71) Applicant: LG Energy Solution, Ltd., Seoul 07335 (KR)
(72) Inventor: KANG, Jung Nam, Daejeon 34122 (KR); KIM, Dong Hyun, Daejeon 34122 (KR)
(74) Representative: Goddar, Heinz J.
(86) International application number: PCT/KR2022/018267
(87) International publication number: WO 2023/090926

(57) **Abstract**

The present invention relates to a battery cell charging and discharging apparatus including a tray configured to allow a plurality of battery cells to be mounted thereon, a plurality of lower cooling fans disposed at the tray, a power jig comprising a terminal configured to supply power to the battery cells and the lower cooling fans, and upper cooling fans disposed above the tray, wherein temperature deviation between the battery cells is minimized.

## Description

### [Technical Field]

This application claims the benefit of priority to Korean Patent Application No. 2021-0160235 filed on November 19, 2021 and Korean Patent Application No. 2022-0154858 filed on November 17, 2022, the disclosure of which are incorporated herein by reference in their entireties.

The present invention relates to a battery cell charging and discharging apparatus including a lower cooling fan. More particularly, the present invention relates to a battery cell charging and discharging apparatus including a lower cooling fan capable of preventing overheating of a battery cell during charging and discharging of the battery cell.

### [Background Art]

A lithium secondary battery, which is capable of being charged and discharged, has been widely used as an energy source for wireless mobile devices or wearable devices, which are worn on bodies, and has also been used as an energy source for electric vehicles and hybrid electric vehicles presented as alternatives to existing gasoline and diesel vehicles, which cause air pollution.

Depending on the material and shape of a battery case, the lithium secondary battery may be classified as a cylindrical battery cell having an electrode assembly mounted in a metal can, a prismatic battery cell having an electrode assembly mounted in a metal can, or a pouch-shaped battery cell having an electrode assembly mounted in a battery case made of a laminate sheet. The pouch-shaped battery cell has advantages of easy deformation and high energy density.

The lithium secondary battery is manufactured through an electrode plate process of manufacturing electrode plates and stacking or winding the electrode plates with a separator to manufacture an electrode assembly and a process of receiving the electrode assembly in a battery case, injecting an electrolytic solution into the battery case, and hermetically sealing the battery case. The lithium secondary battery thus assembled undergoes through a formation process including a charging and discharging process and an aging process, whereby it is possible to sort defective products and to improve performance of the lithium secondary battery.

In order to perform the charging and discharging process, a plurality of battery cells is disposed at a charging and discharging jig in a state of being mounted on a tray and is then repeatedly charged and discharged.

Heat is generated from the lithium secondary battery in the charging and discharging process, which may reduce performance of the battery. For this reason, a cooling fan is disposed above the battery cells. In such a structure, however, rising high-temperature gas moves downwards, whereby convection occurs, and therefore a battery cell cooling effect is low.

In connection therewith, in Patent Document 1, which relates to a charging and discharging apparatus, temperatures of all battery cells may be measured, whereby temperature deviation between the battery cells may be considered at the time of capacity calculation, and rapid temperature measurement may be performed using a non-contact type temperature sensor unit while the battery cells are not affected.

In Patent Document 1, cooling fans configured to reduce temperature deviation between the battery cells may be provided, and the blow direction and output of the cooling fans may be adjusted. Since the cooling fans are installed above a tray, in which the battery cells are received, and are disposed so as to blow air immediately downwards toward the secondary batteries, however, there is a problem in that hot air generated from the battery cells is not discharged to the outside but circulates in the tray.

Patent Document 2, which relates to a secondary battery charging and discharging apparatus configured to charge and discharge battery cells in a battery cell activation process, discloses a construction including a first cooling member provided at a charging and discharging connection module configured to charge and discharge battery cells loaded on two or more trays in the state in which the trays are stacked such that the battery cells can be simultaneously charged and discharged and a second cooling member located above the battery cells loaded on the tray.

In Patent Document 2, the cooling members configured to cool the battery cells that are charged and discharged in order to adjust the temperatures of the battery cells are included, wherein the first cooling member blows air toward the battery cells in a lateral direction, and the second cooling member blows air toward the battery cells in a downward direction.

In Patent Document 2, the cooling members are disposed under the sides of the two or more trays, which are stacked in a vertical direction, and above the tray, whereby air components blown by the cooling members join each other at a right angle, and therefore the air components easily collide with each other. Consequently, it is difficult to discharge heated air.

Therefore, there is a necessity for technology capable of efficiently discharging hot air discharged from a plurality of battery cells from a battery cell charging and discharging apparatus configured to charge and discharge the plurality of battery cells in a state of being mounted on a tray, thereby reducing temperature deviation between the battery cells.

### (Prior Art Documents)

(Patent Document 1) Korean Patent Application Publication No. 2020-0078207 (2020.07.01)
(Patent Document 1) Korean Registered Patent Publication No. 2089264 (2020.03.10)

### [Disclosure]

### [Technical Problem]

The present invention has been made in view of the above problems, and it is an object of the present invention to provide a battery cell charging and discharging apparatus capable of efficiently discharging air heated during a battery cell charging and discharging process and managing temperature deviation between battery cells.

### [Technical Solution]

A battery cell charging and discharging apparatus according to the present invention to accomplish the above object includes a tray configured to allow a plurality of battery cells to be mounted thereon, a plurality of lower cooling fans disposed at the tray, a power jig including a terminal configured to supply power to the battery cells and the lower cooling fans, and upper cooling fans disposed above the tray.

The battery cell charging and discharging apparatus may further include a temperature sensor configured to measure temperatures of the battery cells.

The battery cell charging and discharging apparatus may further include a PCB configured to collect temperature information of the temperature sensor and to control speeds of the upper cooling fans.

The PCB may be configured to transmit temperature information of the plurality of battery cells obtained through the temperature sensor to an upper-level server.

The power jig may include a terminal pin connected to the tray.

Each of the battery cells may be a pouch-shaped battery cell having a positive electrode lead and a negative electrode lead protruding from opposite ends thereof in an overall length direction, and the lower cooling fans may be disposed at the opposite ends of the battery cells in the overall length direction and middle parts of the battery cells in the overall length direction.

The lower cooling fans may be disposed to face toward the battery cells to generate a rising flow of air, and the upper cooling fans may be configured to discharge the rising air.

The power jig may include a base portion configured to allow the tray to be disposed on an upper surface thereof and a first side portion and a second side portion respectively disposed so as to be opposite positive electrode leads and negative electrode leads of the battery cells, and the first side portion and the second side portion may be movable such that the distance therebetween is decreased or may be movable such that the distance therebetween is increased.

The first side portion may include a terminal pin configured to supply power to the lower cooling fans and a PCB, and the first side portion and the second side portion may include grippers configured to be coupled to the positive electrode leads and the negative electrode leads of the plurality of battery cells, respectively.

The upper cooling fans may be disposed in two lines above the vicinities of battery cells disposed at the outermost sides, among the plurality of battery cells, in an overall length direction of the battery cells, and thermal energies discharged from the plurality of battery cells may be discharged out of the tray, on which the plurality of battery cells is mounted.

The tray may be provided as a plurality of trays stacked in an upward-downward direction.

Each tray may have a heat movement path formed such that thermal energies of the battery cells mounted on the respective trays can be moved upwards by air generated by the lower cooling fans.

In addition, the present invention may provide various combinations of the above solving means.

### [Advantageous Effects]

As is apparent from the above description, a battery cell charging and discharging apparatus according to the present invention is configured such that air is raised by a lower cooling fan and the raised air is discharged out of a power jig by an upper cooling fan, whereby it is possible to efficiently cool battery cells.

In addition, temperature sensors are disposed adjacent to the battery cells, whereby it is possible to accurately measure the temperatures of the battery cells and to reduce temperature deviation between the battery cells.

In addition, at least three cooling fans are disposed at one battery cell, and individual temperature control may be performed through the cooling fans, whereby it is possible to minimize the occurrence of temperature deviation in one battery cell.

### [Description of Drawings]

FIG. 1 is a front view of a battery cell charging and discharging apparatus according to a first embodiment.
FIG. 2 is an exploded perspective view of a battery cell charging and discharging apparatus according to a second embodiment.
FIG. 3 is a front view of the battery cell charging and discharging apparatus according to the second embodiment.
FIG. 4 is a front view showing a power jig of the battery cell charging and discharging apparatus before and after movement thereof.
FIG. 5 is a plan view of the battery cell charging and discharging apparatus according to the second embodiment.
FIG. 6 is a front view of a battery cell charging and discharging apparatus according to a third embodiment.
FIG. 7 is a partial front view and a partial side view of the power jig.
FIG. 8 is a partial front view and a partial side view of a tray.
FIG. 9 is a graph showing the average temperatures of pouch-shaped battery cells measured through thermographs.
FIG. 10 is a graph showing the average temperatures of pouch-shaped battery cells measured through temperature sensors.
FIG. 11 is a graph showing distribution in temperature of the pouch-shaped battery cells measured by the temperature sensors according to a comparative example.
FIG. 12 is a graph showing distribution in temperature of the pouch-shaped battery cells measured by the temperature sensors according to an example.
FIG. 13 is a graph showing the result of simulation according to the comparative example in a reference example.
FIG. 14 is a graph showing the result of simulation according to the example in the reference example.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Embodiments of the present invention will be described in detail with reference to the accompanying drawings.

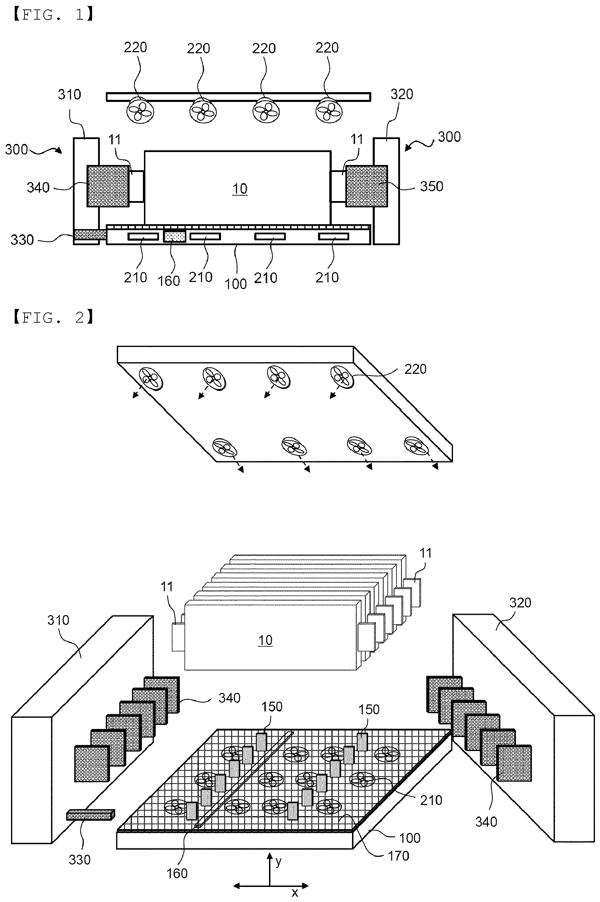

FIG. 1 is a front view of a battery cell charging and discharging apparatus according to a first embodiment.

Referring to FIG. 1, the battery cell charging and discharging apparatus according to the present invention includes a tray 100 configured to allow a plurality of battery cells 10 to be mounted thereon, a plurality of lower cooling fans 210 disposed at the tray 100, a power jig 300 including a terminal configured to supply power to the battery cells 10 and the lower cooling fans 210, and upper cooling fans 220 disposed above the tray.

After assembly of a lithium secondary battery, a battery cell may be charged and discharged in an activation process of improving the performance of the battery and a process of inspecting the performance of the battery cell, and the battery cell charging and discharging apparatus according to the present invention may be used.

During a process of charging and discharging the battery cell, a heat generation phenomenon in which the temperature of the battery cell increases may occur, and this may lower the performance of the battery cell. In the battery cell charging and discharging apparatus, therefore, the lower cooling fans and the upper cooling fans are provided to cool the high-temperature battery cell.

Since the lower cooling fans 210 spray air toward the battery cells 10, a rising flow of air is generated. In order to prevent downward movement of the rising air, the upper cooling fans 220 are disposed so as not to face the power jig 300, and a flow of air that discharges the rising air out of the tray and the power jig is generated.

As described above, the heated air may be raised and discharged, and therefore it is possible to prevent a problem in that the heated air moves back downwards, thus increasing the temperature of the battery cell.

The power jig 300 includes a terminal pin 330 configured to supply power to the lower cooling fans 210 and a printed circuit board (PCB) 160 and a gripper 340 coupled to an electrode lead 11 of each of the battery cells 10 in order to charge and discharge the battery cells 10.

Power necessary to operate the upper cooling fans 220 may be supplied through a separate power source other than the power jig 300.

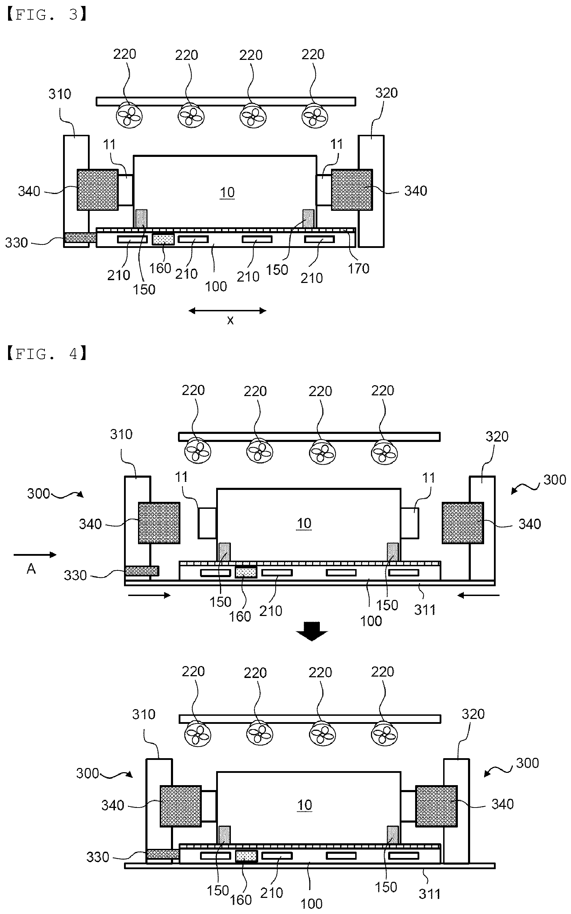

FIG. 2 is an exploded perspective view of a battery cell charging and discharging apparatus according to a second embodiment, and FIG. 3 is a front view of the battery cell charging and discharging apparatus according to the second embodiment.

Referring to FIGs. 2 and 3, the battery cell charging and discharging apparatus according to the present invention further includes a temperature sensor 150 configured to measure the temperature of each of the battery cells 10. In addition, the battery cell charging and discharging apparatus according to the present invention further includes a PCB 160 configured to collect temperature information of the temperature sensor and to control the speed of each of the lower cooling fans 210.

The temperature sensor 150 may be located at each of opposite ends of all of the battery cells 10 in an overall length direction x, and may be disposed so as to be brought into tight contact with the battery cell 10. The temperature sensor may accurately measure change in temperature of each of the battery cells 10 in real time.

In addition, since the temperature sensor 150 is disposed adjacent to an electrode tab and an electrode lead, which are the most heated parts of the battery cell, it is possible to manage the battery cell such that the maximum temperature of the battery cell does not exceed a reference temperature.

In addition, the temperature sensor is disposed adjacent to each of the battery cells. When any one of the battery cells having temperature deviation is sensed, therefore, it is possible to adjust the speed of the lower cooling fan such that the temperature of the battery cell having temperature deviation becomes the average temperature. Consequently, it is possible to rapidly eliminate temperature deviation between the battery cells.

Specifically, in the present invention, a plurality of lower cooling fans is disposed over the entirety of the tray. Control may be performed such that the speed of a lower cooling fan located under a battery cell having high temperature is increased and the speed of a lower cooling fan located under a battery cell having low temperature is decreased, whereby it is possible to manage all of the battery cells such that the temperatures of the battery cells are equalized.

In addition, each of the battery cells is a pouch-shaped battery cell having a positive electrode lead and a negative electrode lead protruding from opposite ends thereof in the overall length direction x, and the lower cooling fans 210 are disposed at the opposite ends of the battery cells 10 in the overall length direction x and middle parts of the battery cells in the overall length direction x. When temperature deviation occurs even in one of the battery cells, therefore, the speed of the lower cooling fan may be adjusted to prevent the occurrence of temperature deviation in the single battery cell.

In a concrete example, the temperature sensors 150 may be attached to an upper surface of the tray 100, and the lower cooling fan and the temperature sensor may be disposed so as not to overlap each other in a vertical direction y such that the temperature sensor does not become an obstacle in accurately measuring the temperature of the battery cell.

In addition, the battery cells 10 are mounted on the upper surface of the tray 100, and a space may be formed between the battery cells and the lower cooling fans such that the battery cells 10 do not become obstacles in operation of the lower cooling fans 210. A reticular structure 170 may be disposed in the space such that upward movement of cooling air sprayed by the lower cooling fan is not disturbed.

The PCB 160 may transmit temperature information of the plurality of battery cells obtained through the temperature sensors 150 to an upper-level server, and transmission through wireless communication may be performed.

FIG. 4 is a front view showing the power jig of the battery cell charging and discharging apparatus before and after movement thereof.

Referring to FIG. 4, the power jig 300 includes a base portion 311 configured to allow the tray 100 to be disposed on an upper surface thereof and a first side portion 310 and a second side portion 320 respectively disposed so as to be opposite the positive electrode leads and the negative electrode leads of the battery cells, wherein the first side portion 310 and a second side portion 320 may be moved such that the distance therebetween is decreased or may be moved such that the distance therebetween is increased.

The first side portion 310 includes a terminal pin 330 configured to supply power to the lower cooling fan 210 and the PCB 160, and the first side portion 310 and the second side portion 320 include grippers 340 coupled to the positive electrode leads and the negative electrode leads of the plurality of battery cells 10, respectively. In addition, power necessary to charge and discharge the plurality of battery cells may be supplied through the first side portion and the second side portion, and charging and discharging may be performed in the state in which the grippers are coupled to the positive electrode leads and the negative electrode leads. Meanwhile, the power source may further include an auxiliary power source such that the plurality of battery cells can be stably charged and discharged.

Specifically, the first side portion 310 and the second side portion 320 may be moved such that the distance therebetween is decreased, and the grippers 340 are coupled to the electrode leads 11, whereby the battery cells may be charged and discharged, and the terminal pin 330 may be connected to the tray 100, whereby power may be supplied to the lower cooling fans 210 and the PCB 160.

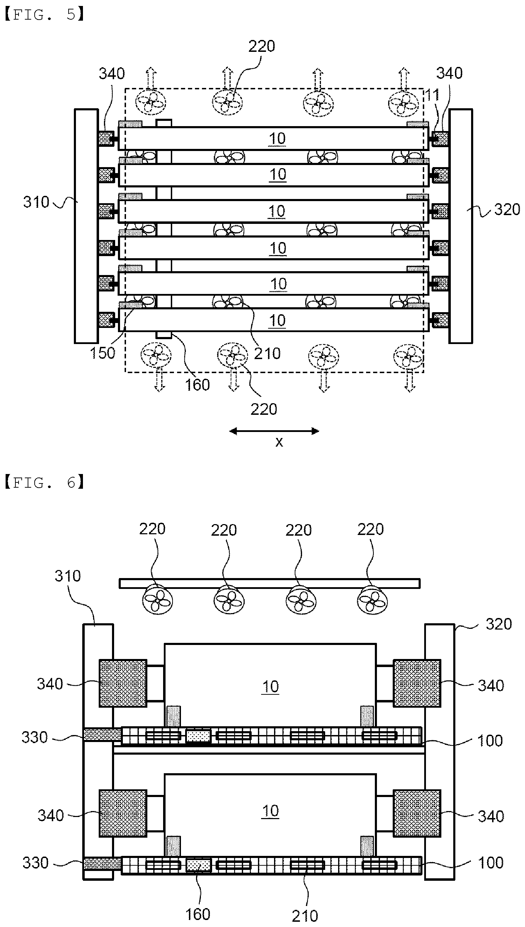

FIG. 5 is a plan view of the battery cell charging and discharging apparatus according to the second embodiment. Reference numerals shown in FIG. 5 denote the same components as shown in FIGs. 2 and 3.

Referring to FIG. 5, the power jig includes a first side portion 310 and a second side portion 320 respectively disposed at opposite ends of the battery cells in a major-axis direction x, and the plurality of battery cells 10 is mounted on the tray so as to be brought into tight contact with the temperature sensors 150.

The lower cooling fans 210 disposed at the tray are disposed toward the battery cells 10 and generate a rising flow of air. The upper cooling fans 220 are disposed above the outer periphery of the tray or above the outside of the outer periphery of the tray and are disposed toward lower sides of the plurality of battery cells 10 in the opposite direction. When the upper cooling fans are operated, therefore, air raised by the lower cooling fans may be discharged out of the tray.

Specifically, the upper cooling fans 220 are disposed in two lines above the vicinities of battery cells disposed at the outermost sides, among the plurality of battery cells 10, in the overall length direction x of the battery cells, and thermal energies discharged from the plurality of battery cells 10 are discharged out of the tray, on which the plurality of battery cells 10 is mounted, in directions indicated by dotted arrows of FIG. 5.

Consequently, an effect of cooling the plurality of battery cells mounted on the tray may be improved.

FIG. 6 is a front view of a battery cell charging and discharging apparatus according to a third embodiment.

Referring to FIG. 6, the battery cell charging and discharging apparatus is configured to have a structure including a plurality of trays 100 stacked in an upward-downward direction.

A plurality of battery cells 10 to be charged and discharged is disposed on each of the plurality of trays 100, and a lower cooling fan 210 and a PCB 160 are disposed at each of the trays 100. A plurality of upper cooling fans 220 is disposed above the battery cells mounted on the uppermost tray.

Since the plurality of trays is disposed so as to be stacked, the height of the first side portion 310 and the second side portion 320 of the power jig are increased, and the first side portion 310 and the second side portion 320 are moved so as to be close to or far from the trays 100.

The first side portion 310 includes a plurality of terminal pins 330 coupled to side surfaces of the trays 100 and configured to supply power to the trays 100, respectively, and grippers 340 coupled to the electrode leads in order to charge and discharge the battery cells 10 are disposed at positions corresponding to the electrode leads of the battery cells stacked in the upward-downward direction.

A heat movement path may be formed such that thermal energies of the battery cells mounted on the respective trays can be moved upwards by air generated by the lower cooling fans even though the plurality of trays is stacked, as described above.

Specifically, each of the trays may be configured to have a reticular structure or a plurality of through-holes, through which air passes.

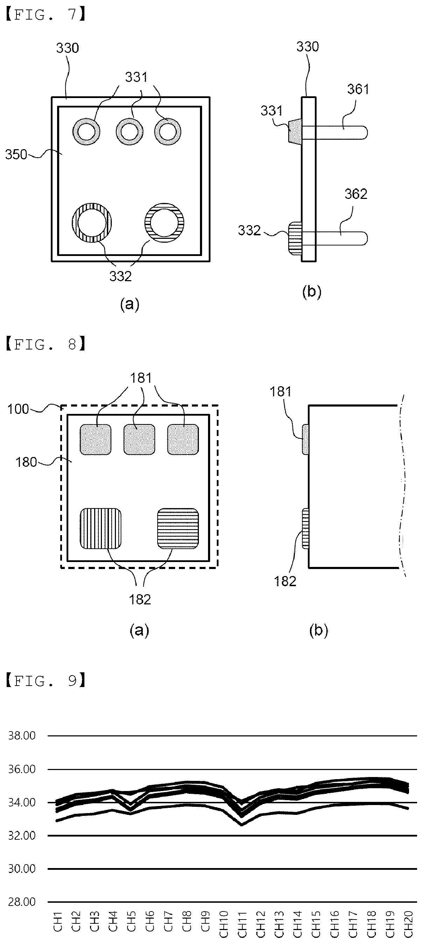

FIG. 7 is a partial front view (a) and a partial side view (b) of the power jig.

(a) of FIG. 7 is an enlarged view of the terminal pin 330 of the first side portion when the first side portion is viewed from position A of FIG. 4, and (b) of FIG. 7 is a view of the terminal pin when (a) of FIG. 7 is viewed from the side.

Referring to FIG. 7, a board 360 is located at an outer surface of the terminal pin 330, and three terminals 331 are disposed at an upper end of the board 360. The three terminals 331 may be communication terminals configured to transmit temperature information collected by the PCB to the upper-level server. For example, the communication terminals may be Rx, Tx, and GND lines for RS-232 communication. A LEENO pin 361 is coupled to each of the three terminals 331, and the LEENO pin 361 is connected to a corresponding one of the terminals 331 so as to protrude from a first coupling surface to an outer surface opposite the surface to which the board 360 is attached.

Two terminals 332 are disposed at a lower end of the board 360, and these terminals are power terminals configured to supply power to the PCB and the lower cooling fan. For example, the power terminals may be power terminals of DC 24V. A LEENO pin 362 is coupled to each of the terminals 332, and the LEENO pin 362 is connected to a corresponding one of the terminals 332 so as to protrude from the first coupling surface to the outer surface opposite the surface to which the board 360 is attached.

FIG. 8 is a partial front view and a partial side view of the tray.

(a) of FIG. 8 is an enlarged view showing the part of the tray 100 that is coupled to the terminal pin 330 when the tray 100 is viewed from position A of FIG. 4, and (b) of FIG. 8 is a view of the tray when (a) of FIG. 8 is viewed from the side.

Referring to FIG. 8, when the first side portion moves closer to the tray, the LEENO pins 361 and 362 of the terminal pin 330 are brought into contact with connectors 181 and 182 provided at a coupling portion 180 of the tray 100. That is, the LEENO pins 361 of FIG. 7 are coupled to the connectors 181, whereby electrical connection is achieved, and therefore temperature information collected by the PCB may be transmitted to the upper-level server. In addition, the LEENO pins 362 of FIG. 7 are coupled to the connectors 182, whereby electrical connection is achieved, and therefore power may be supplied to the PCB and the lower cooling fans.

In the present invention, as described above, the plurality of lower cooling fans is mounted to the tray on which the plurality of battery cells is mounted, whereby it is possible to prevent the occurrence of temperature deviation between the battery cells. In addition, the upper cooling fans are mounted above the tray to discharge rising hot air out of the tray and the power jig, and therefore it is possible to improve battery cell cooling efficiency.

Hereinafter, the present invention will be described with reference to the following example. This example is provided only for easier understanding of the present invention and should not be construed as limiting the scope of the present invention.

### <Measurement results of temperatures of battery cells using thermograph and temperature sensor>

A thermograph was attached to each of opposite ends of 20 pouch-shaped battery cells in the overall length direction to measure a change in temperature of each of the pouch-shaped battery cells during a charging and discharging process in real time.

Temperature sensors were located at a tray on which the 20 pouch-shaped battery cells were mounted such that the temperature sensors were disposed so as to be brought into tight contact with the pouch-shaped battery cells at opposite ends of the pouch-shaped battery cells, and a change in temperature of each of the pouch-shaped battery cells during a charging and discharging process was measured in real time.

The temperatures measured by the thermographs and the temperature sensors, as described above, were compared to each other.

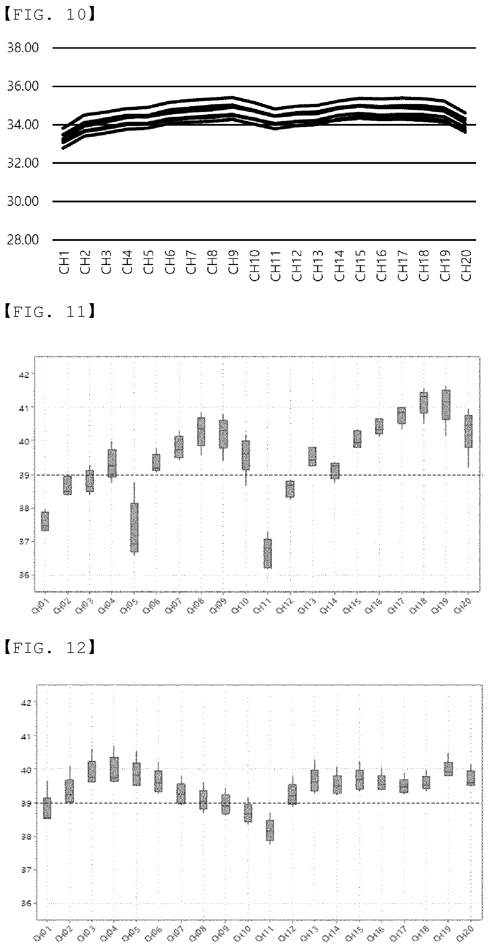

FIG. 9 is a graph showing the average temperatures of the pouch-shaped battery cells measured through the thermographs, and FIG. 10 is a graph showing the average temperatures of the pouch-shaped battery cells measured through the temperature sensors.

Referring to FIGs. 9 and 10, the horizontal axis indicates 20 pouch-shaped battery cells, and the vertical axis indicates measured temperatures. A plurality of lines constituting the graph, which are the results of measurement of the temperatures of the pouch-shaped battery cells performed seven times, indicate the average temperatures in respective charging and discharging processes.

It can be seen that change in average temperature of the battery cells measured through the thermographs and change in average temperature of the battery cells measured through the temperature sensors are identical to each other.

In the results measured by the thermographs and the temperature sensors, the difference in average temperature is less than ±1°C.

Consequently, it can be seen that the temperatures of the pouch-shaped battery cells measured using the temperature sensors installed at the tray and the temperatures of the pouch-shaped battery cells measured using the thermographs directly attached to the battery cells are similar to each other, i.e. there is little difference therebetween.

Consequently, it is possible to obtain change in temperature similar to the result of measurement using the thermographs through only a simple process of disposing the pouch-shaped battery cells at the temperature sensors provided at the tray so as to be brought into tight contact therewith, as in the present invention, while a process of attaching the thermographs to outer surfaces of all of the battery cells is omitted.

### <Comparative Example>

Upper cooling fans were mounted only above a tray, 20 pouch-shaped battery cells were disposed on the tray, and the pouch-shaped battery cells were charged and discharged.

Temperature sensors were attached to the vicinities of positive electrode tabs and negative electrode tabs of the 20 pouch-shaped battery cells, and the temperatures of the battery cells were measured five times in real time.

The plurality of upper cooling fans was disposed above the plurality of pouch-shaped battery cells so as to be spaced apart from each other at regular intervals and was installed so as to blow air downwards toward the plurality of pouch-shaped battery cells at a speed of 5 m/s.

FIG. 11 is a graph showing distribution in temperature of the pouch-shaped battery cells measured by the temperature sensors according to the comparative example.

### <Example>

Lower cooling fans were mounted at the side of a tray, 20 pouch-shaped battery cells were disposed on the tray, and the pouch-shaped battery cells were charged and discharged.

Temperature sensors were attached to the vicinities of positive electrode tabs and negative electrode tabs of the 20 pouch-shaped battery cells, and the temperatures of the battery cells were measured five times in real time.

The plurality of lower cooling fans was disposed at opposite sides of the plurality of pouch-shaped battery cells so as to be spaced apart from each other at regular intervals and was installed so as to blow air toward the plurality of pouch-shaped battery cells at a speed of 1 m/s.

FIG. 12 is a graph showing distribution in temperature of the pouch-shaped battery cells measured by the temperature sensors according to the example.

Referring to FIGs. 11 and 12, heat generated from the plurality of pouch-shaped battery cells is not discharged to the outside but is accumulated in the tray, whereby the temperature of the pouch-shaped battery cells and the temperature in the tray are increased. As a result, the graph of FIG. 11 shows the result that the number of battery cells having higher temperatures than in the graph of FIG. 12 is large.

In the comparative example of FIG. 11, measured temperature deviation between the 20 pouch-shaped battery cells is 39±3°C, which means that temperature difference is relatively large, and it is determined that the measured temperatures of CH1, CH5, and CH11 are low due to the influence of the upper cooling fans.

In the example of FIG. 12, measured temperature deviation between the 20 pouch-shaped battery cells is 39±1°C, which means that temperature difference is relatively small.

When the lower cooling fans are disposed at the side of the pouch-shaped battery cells instead of providing only the upper cooling fans that blow air in a downward direction, as described above, air circulates in the tray, whereby overall temperature is uniformly formed, and therefore it can be seen that temperature deviation between the plurality of pouch-shaped battery cells is decreased. Consequently, when the lower cooling fans are provided, as in the example, and additionally the upper cooling fans are further provided in order to discharge heat generated from the plurality of pouch-shaped battery cells to the outside of the tray, it can be expected that it is possible to further inhibit increase in temperature of the pouch-shaped battery cells and to reduce temperature deviation therebetween.

### <Reference Example>

In order to simulate air current measured in the comparative example and the example, simulation was performed in consideration of the following boundary conditions and material properties.

### Boundary conditions

- Analysis Type: Steady State
- Turbulence: SST (Shear Stress Transport)
- Energy: Thermal Energy Model
- Front Inlet: Opening Condition (29°C inflow)
- Rear Outlet: Velocity Outlet Condition (0.5 m/s)
- Wall: No slip Condition
- Fan: P-Q Curve (Momentum Source)

### Property information

**[Table 1]**

| Classification | Density (kg/m³) | Viscosity coefficient (kg/m·s) | Thermal conductivity (W/m·K) |
|---|---|---|---|
| Air | 1.185 | 1.831×10⁻⁵ | 2.61×10⁻² |

### Simulation model configuration information

- Comparative Example Node/Element: 40,965,121 EA/132,988,707 EA
- Example Node/Element: 39,104,3668 EA/146,031,145 EA
- Lattice Type: Tetra, Wedge
- Pre/Post processor: Ansys Meshing 2021R2/CFD Post 2021R2
- Solver: CFX2021R2

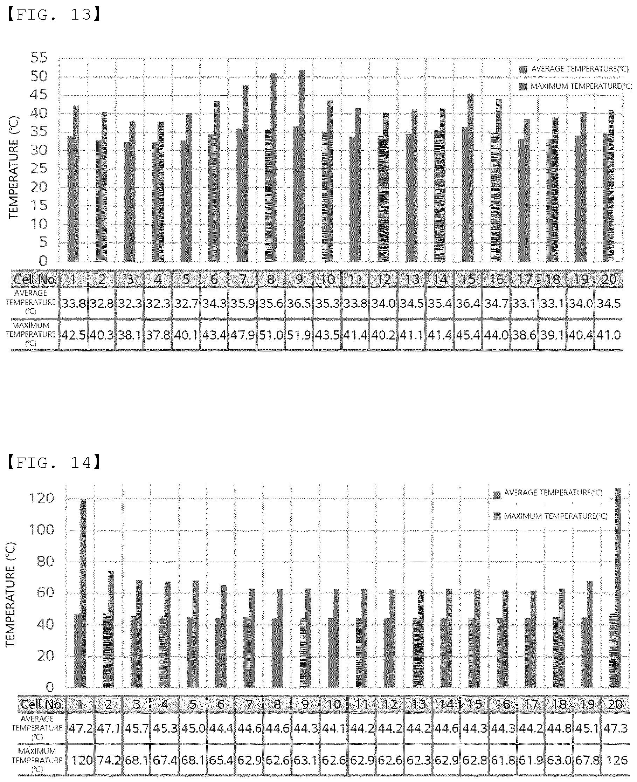

Simulation results of the comparative example and the example under the above simulation conditions are shown in FIGs. 13 and 14.

FIG. 13 is a graph showing the result of simulation according to the comparative example in the reference example, and FIG. 14 is a graph showing the result of simulation according to the example in the reference example.

Referring to FIG. 13, the average speed of air blown by the upper cooling fans mounted above the tray is calculated to be 5 m/, and it is confirmed that, since air is blown from top to bottom, the temperature of the upper part of each of the pouch-shaped battery cells, which air reaches first, is lower than the temperature of the vicinity thereof.

The average temperature of the pouch-shaped battery cells was calculated to be 34°C, the average temperature deviation between the pouch-shaped battery cells was 4.2°C, and the maximum temperature deviation between the pouch-shaped battery cells was 14.1°C.

Referring to FIG. 14, since air is blown from the interior of the tray to the outside, the air comes into contact with the larger area parts of the pouch-shaped battery cells, whereby heat transfer efficiency is improved. However, the flow rate of the lower cooling fans is about 6.8 times lower than the flow rate of the upper cooling fan, and therefore the overall average temperature of the pouch-shaped battery cells is calculated to be higher by 10°C.

The reason that the maximum temperature of each of Cell 1 and Cell 20 is that the front end and the rear end of the tray are closed and it is difficult for air from the lower cooling fans to enter opposite ends of the tray, whereby the temperature is calculated to be abnormally high.

That is, the average temperature of the pouch-shaped battery cells was calculated to be 44°C, the average temperature deviation between the pouch-shaped battery cells was 3.2°C, and the maximum temperature deviation between the pouch-shaped battery cells was 64.7°C.

In the present invention, therefore, it can be seen that the lower cooling fans are provided to blow air from the interior of the tray to the outside, as in the example, whereby it is possible to reduce temperature deviation between the battery cells mounted on the tray.

Those skilled in the art to which the present invention pertains will appreciate that various applications and modifications are possible within the category of the present invention based on the above description.

### (Description of Reference Numerals)

10: Battery cell
11: Electrode lead
100: Tray
150: Temperature sensor
160: PCB
170: Reticular structure
180: Coupling portion
181, 182: Connectors
210: Lower cooling fan
220: Upper cooling fan
300: Power jig
310: First side portion
311: Base portion
320: Second side portion
330: Terminal pin
331, 332: Terminals
340: Gripper
350: Board
361, 362: LEENO pins

## Claims

1. A battery cell charging and discharging apparatus comprising:
a tray configured to allow a plurality of battery cells to be mounted thereon;
a plurality of lower cooling fans disposed at the tray;
a power jig comprising a terminal configured to supply power to the battery cells and the lower cooling fans; and
upper cooling fans disposed above the tray.

2. The battery cell charging and discharging apparatus according to claim 1, further comprising a temperature sensor configured to measure temperatures of the battery cells.

3. The battery cell charging and discharging apparatus according to claim 2, further comprising a PCB configured to:
collect temperature information of the temperature sensor; and
control speeds of the upper cooling fans.

4. The battery cell charging and discharging apparatus according to claim 3, wherein the PCB is configured to transmit temperature information of the plurality of battery cells obtained through the temperature sensor to an upper-level server.

5. The battery cell charging and discharging apparatus according to claim 1, wherein the power jig includes a terminal pin connected to the tray.

6. The battery cell charging and discharging apparatus according to claim 1, wherein each of the battery cells is a pouch-shaped battery cell having a positive electrode lead and a negative electrode lead protruding from opposite ends thereof in an overall length direction, and
wherein the lower cooling fans are disposed at the opposite ends of the battery cells in the overall length direction and middle parts of the battery cells in the overall length direction.

7. The battery cell charging and discharging apparatus according to claim 1, wherein the lower cooling fans are disposed to face toward the battery cells to generate a rising flow of air, and
wherein the upper cooling fans are configured to discharge the rising air.

8. The battery cell charging and discharging apparatus according to claim 1, wherein the power jig comprises:
a base portion configured to allow the tray to be disposed on an upper surface thereof; and
a first side portion and a second side portion respectively disposed so as to be opposite positive electrode leads and negative electrode leads of the battery cells, and
wherein the first side portion and the second side portion are movable such that a distance therebetween is decreased or are movable such that the distance therebetween is increased.

9. The battery cell charging and discharging apparatus according to claim 8, wherein the first side portion comprises a terminal pin configured to supply power to the lower cooling fans and a PCB, and
wherein the first side portion and the second side portion comprise grippers configured to be coupled to the positive electrode leads and the negative electrode leads of the plurality of battery cells, respectively.

10. The battery cell charging and discharging apparatus according to claim 1, wherein the upper cooling fans are disposed in two lines above vicinities of battery cells disposed at outermost sides, among the plurality of battery cells, in an overall length direction of the battery cells, and
wherein thermal energies discharged from the plurality of battery cells are discharged out of the tray, on which the plurality of battery cells is mounted.

11. The battery cell charging and discharging apparatus according to claim 1, wherein the tray is provided as a plurality of trays stacked in an upward-downward direction.

12. The battery cell charging and discharging apparatus according to claim 11, wherein each tray has a heat movement path formed such that thermal energies of the battery cells mounted on the respective trays are moved upwards by air generated by the lower cooling fans.
